# FASCICULE DE BREVET EUROPEEN

(11) **EP 2 145 331 B1**
(45) Date de publication et mention de la délivrance du brevet: **26.01.2011**
(21) Numéro de dépôt: 08749913.3
(22) Date de dépôt: 30.04.2008
(51) Int. Cl.: G11B 7/005, G11B 7/135, G11B 7/24, G11B 7/252, G11B 7/258

(54) **PROCEDE ET SYSTEME DE LECTURE D'INFORMATIONS OPTIQUES A HAUTE DENSITE**
VERFAHREN UND SYSTEM ZUM LESEN OPTISCHER INFORMATIONEN MIT HOHER DICHTE
METHOD AND SYSTEM FOR READING HIGH DENSITY OPTICAL INFORMATION

(30) Priorité: 04.05.2007 FR 0703247
(43) Date de publication de la demande: 20.01.2010
(73) Titulaire: Commissariat à l'Énergie Atomique et aux Énergies Alternatives, 75015 Paris (FR)
(72) Inventeur: MIMOUNI, Salim, 38100 Grenoble (FR); LAULAGNET, Fabien, F-38600 Fontaine (FR)
(74) Mandataire: Guérin, Michel
(86) Numéro de dépôt international: PCT/EP2008/055322
(87) Numéro de publication internationale: WO 2008/135485

(56) Documents cités:
- EP-A- 1 455 351
- WO-A-2005/031730
- US-A1- 2004 062 503

## Description

L'invention concerne l'enregistrement et la lecture optique d'informations à haute densité.

Lorsqu'on cherche à accroître la densité d'informations enregistrées sur un disque optique, on est en général limité par les performances du dispositif de lecture des informations. Le principe de base est que l'on ne peut que très difficilement lire des informations physiques inscrites dans le disque si leur dimension est inférieure à la limite de résolution du système optique qui servira à lire ces informations. Typiquement, avec une lecture par un laser rouge de longueur d'onde 650nm et une ouverture numérique de 0,6 on ne peut normalement pas espérer lire correctement des informations de dimension inférieure à 0,4 micromètre, à la rigueur 0,3 micromètre. Avec un laser bleu de longueur d'onde 400 nm, on ne pourra pas lire des marques de dimension inférieure à 0,2 ou 0,3 micromètres.

Cependant, des méthodes dites de super-résolution ont été imaginées pour lire des informations dont la dimension physique est inférieure, voire même très inférieure, à la longueur d'onde. Ces méthodes se fondent sur les propriétés optiques non-linéaires de certains matériaux. Par propriétés non-linéaires, on entend le fait que certaines propriétés optiques du matériau changent en fonction de l'intensité de la lumière qu'ils reçoivent. La cause directe de ce changement peut être l'échauffement thermique dû à cet éclairement : c'est le laser de lecture lui-même qui va modifier localement les propriétés optiques du matériau par des effets thermiques, optiques, thermo-optiques et/ou optoélectroniques sur des dimensions plus petites que la dimension du spot laser de lecture ; du fait du changement de propriété, une information optique présente dans ce très petit volume devient détectable alors qu'elle n'aurait pas été détectable sans ce changement.

Le phénomène qu'on exploite est fondé principalement sur deux propriétés du laser de lecture qu'on va utiliser :
- d'une part le laser est focalisé très fortement de manière à présenter une section extrêmement petite (de l'ordre de la longueur d'onde) mais dont la distribution de puissance est gaussienne, très forte en son centre, très atténuée à la périphérie,
- et d'autre part, on choisit une puissance de laser de lecture telle que la densité de puissance sur une petite partie de la section, au centre du faisceau, modifie significativement une propriété optique de la couche, alors que la densité de puissance en dehors de cette petite portion de section ne modifie pas significativement cette propriété optique ; la propriété optique est modifiée dans un sens tendant à permettre la lecture d'une information qui ne serait pas lisible sans cette modification.

Par exemple, la propriété optique qui change est une augmentation de la transmission optique dans le cas où la lecture d'un bit constitué par une marque physique formée sur le disque optique nécessite une transmission du faisceau laser jusqu'à cette marque physique. La couche non-linéaire est alors interposée sur le trajet du faisceau vers la marque physique. Le centre du faisceau laser va pouvoir traverser la couche jusqu'à la marque, du fait qu'en traversant la couche l'intensité de la lumière incidente la rend plus transparente, alors que la périphérie du faisceau ne va pas traverser car elle ne modifie pas suffisamment les indices optiques de la couche pour la rendre plus transparente. Tout se passe alors comme si on avait utilisé un faisceau focalisé sur un diamètre beaucoup plus étroit que ce que permet sa longueur d'onde.

Diverses propositions théoriques ont été formulées pour mettre en oeuvre ces principes, mais aucune n'a donné lieu à un développement industriel. Le brevet US 5 153 873 rappelle la théorie. Dans le brevet EP 1492 101 on décrit une couche à super-résolution constituée de nano-particules de métal, accompagnée d'un empilement spécifique contenant un matériau à changement de phase. Un autre document connu WO 2005/031730 A1, utilisé pour la délimitation des revendication 1, 7, 9, décrit la décomposition d'un composé d'oxyde d'argent permettant la génénation de plasmons de surface.

On a trouvé selon l'invention qu'on pouvait utiliser un autre phénomène pour obtenir un effet de super-résolution. L'idée est d'utiliser la densité d'énergie plus élevée au centre du faisceau laser pour modifier la structure énergétique d'une couche active de manière à la rendre apte à supporter des plasmons de surface. Le couplage du faisceau laser et de la couche active ainsi modifiée peut alors exciter des plasmons de surface dans une interface entre une couche diélectrique et la couche active.

On rappelle que les plasmons de surface sont des ondes en champ proche qui naissent à une interface entre certains matériaux et une couche diélectrique, en présence d'une excitation électromagnétique ; l'excitation, par exemple par une onde optique, agit sur les niveaux d'énergie électronique dans le matériau (typiquement un semiconducteur dopé par un métal) si celui-ci a une structure d'énergies appropriée. Ces ondes de surface ont une distance de propagation faible, de l'ordre de quelques dizaines de nanomètres. Si une telle couche est associée à des marques physiques dans un support de stockage d'informations, les ondes de surface seront perturbées par ces marque et elles peuvent interagir avec un faisceau optique pour renvoyer vers les détecteurs du système de lecture un signal optique en champ lointain qui permettra de lire ces informations.

Pour créer les plasmons de surface qui vont ainsi renforcer le signal optique de retour modulé par les marques physiques du support de stockage, on va donner au faisceau laser de lecture une polarisation elliptique en mode TM prédominant, favorisant l'excitation des plasmons de surface dans la région illuminée par le faisceau laser.

Les marques physiques peuvent être de différentes natures. Le plus souvent elles seront constituées par des creux et des bosses d'un substrat plan, mais elles peuvent être aussi constituées par des changements locaux de l'indice optique d'une couche, voire des changements de phase d'un matériau (zones cristallines et zones amorphes par exemple).

La structure du support de stockage doit alors comporter d'une part un substrat portant les marques physiques porteuses de l'information, et d'autre part, sur ce substrat, la couche active apte à porter les plasmons de surface et une couche diélectrique transparente qui la recouvre.

La couche portant les plasmons de surface est une couche active à super-résolution en ce sens que les plasmons ne peuvent être excités que si la structure énergétique de la couche a été modifiée par un apport d'énergie, et ce n'est que dans une zone réduite au centre du faisceau laser que la densité de puissance est suffisante pour provoquer cet apport d'énergie. Ainsi, les plasmons de surface ne seront créés que dans une zone de dimension inférieure à la dimension du spot laser illuminant la couche. Ceci permettra de lire des marques de dimension inférieure à la résolution du système optique de lecture.

La possibilité d'excitation des plasmons de surface passe par une modification locale de l'indice optique de la couche active. En effet, pour porter une excitation de plasmons de surface, la couche doit être telle que son indice optique complexe n+i.k, là où l'indice est modifié par le spot laser (au centre de celui-ci), vérifie la condition k² - n² positif, la quantité k² - n² étant par ailleurs supérieure à la quantité k₀² - n₀², où (n₀, k₀) est l'indice complexe du matériau de la couche en dehors du centre du faisceau laser, là où des plasmons de surface ne peuvent pas être excités.

Cette condition sur les indices rend la couche localement propice à supporter des plasmons de surface sur de très petites zones de dimension inférieure à la tache de focalisation du laser de lecture ; les plasmons pourront alors être excités dans ces très petites zones sous du fait de l'interaction entre le matériau et les ondes optiques incidentes du faisceau laser, polarisées en mode TM prédominant.

En l'absence de ces plasmons, les marques plus petites que la limite de résolution du système optique de lecture diffractent le faisceau et transforment alors une partie de l'onde optique incidente en onde évanescente qui ne peut pas se propager en champ lointain et qui n'est donc pas détectable. En présence d'une excitation de plasmons, localisés latéralement au centre de la tache de focalisation du laser, à l'interface entre la couche active à super-résolution et la couche diélectrique (transparente) qui la recouvre, il y a un couplage local entre les plasmons et les ondes évanescentes résultant de la diffraction par les petites marques ; ce couplage provoque une diffraction de la lumière en champ lointain, acheminant par conséquent un signal supplémentaire vers le détecteur qui n'aurait pas reçu de signal significatif autrement.

Pour obtenir une polarisation elliptique à dominante TM, en vue d'exciter correctement des plasmons de surface, on prévoit d'interposer dans le système de lecture, entre la lentille de focalisation du faisceau laser et la surface contenant les informations stockées, une lame quart-d'onde dont l'orientation est choisie pour établir une polarisation TM dominante, contrairement à l'habitude où on cherche à établir une polarisation circulaire avec des composantes TE et TM égales. La rotation de la lame quart-d'onde est de préférence comprise entre 0° et 45° par rapport à la position où elle établit une polarisation circulaire (l'angle étant compté positivement dans le sens où la composante TM est favorisée et non dans le sens inverse).

Dans une réalisation préférée, on choisit un angle de rotation de la lame quart-d'onde compris entre 25° et 35° pour maximiser la polarisation TM en moyenne sur la section du faisceau laser. Une valeur préférée de rotation est d'environ 28 à 30°.

Dans une variante, on considère que la polarisation du faisceau n'est pas identique sur toute la section du faisceau et on subdivise la lame quart d'onde en plusieurs lames élémentaires juxtaposées, correspondant chacune à une partie de la section du faisceau, ces lames élémentaires ayant des angles de rotation choisis individuellement pour renforcer la composante TM pour la partie de faisceau traversant cet élément, compte-tenu de la polarisation incidente de cette partie du faisceau. Les choix d'orientation de lames élémentaires sont faits de manière à obtenir une polarisation TM prédominante dans toute la section du faisceau sortant de la lame quart-d'onde.

En résumé, on propose selon l'invention un procédé de lecture optique d'informations inscrites dans un support de stockage à haute densité, **caractérisé en ce que**
- d'une part les informations enregistrées dans le support de stockage sont recouvertes par une couche active ayant un premier et un deuxième états d'énergie électronique possibles, la couche étant apte dans le deuxième état seulement à supporter des plasmons de surface engendrés par une illumination par un faisceau laser de lecture, cette couche active étant recouverte par une couche diélectrique transparente,
- d'autre part la lecture optique est effectuée à partir d'une source laser, une optique de focalisation, et des moyens de polarisation du faisceau focalisé, la densité de puissance dans une zone réduite au centre du faisceau laser focalisé étant suffisante pour faire passer la couche active du premier état vers le deuxième état énergétique de manière à la rendre apte à supporter des plasmons de surface.

La polarisation du faisceau laser focalisé est à prédominance TM pour que l'excitation des plasmons soit effective. Les moyens de polarisation du système de lecture sont aptes à établir une polarisation TM prédominante du faisceau laser.

L'invention porte donc sur un nouveau procédé de lecture optique qui utilise à la fois un support d'enregistrement particulier et des moyens de lecture appropriés. Elle porte aussi sur le support de stockage optique d'informations qui est adapté à ce procédé de lecture et sur un système de lecture des informations qui est adapté à ce procédé de lecture.

D'autres caractéristiques et avantages de l'invention apparaîtront à la lecture de la description détaillée qui suit et qui est faite en référence aux dessins annexés dans lesquels :
- la figure 1 représente la structure générale d'un lecteur d'informations optiques ;
- la figure 2 représente la structure d'un support de stockage d'informations selon l'invention ;
- la figure 3 représente symboliquement une lame biréfringente quart d'onde ;
- la figure 4 représente une rotation de la lame quart d'onde d'un angle α ;
- la figure 5 représente une lame biréfringente composée de plusieurs lames juxtaposées.

Pour une meilleure compréhension de l'invention, on rappelle qu'un plasmon de surface est une onde évanescente qui s'établit des deux côtés d'une interface séparant deux couches. C'est une onde à décroissance exponentielle : son amplitude décroît exponentiellement avec la distance à l'interface.

Les plasmons de surface sont des solutions aux équations de propagation des ondes électromagnétiques. Le vecteur d'onde a deux composantes réelles, correspondant à la propagation de l'onde le long de l'interface et une composante imaginaire qui définit la décroissance exponentielle des deux côtés de l'interface.

Les plasmons de surface sont excités par un couplage électromagnétique entre une onde optique ayant une polarisation de type TM et le milieu dans lequel pénètre cette onde à l'interface.

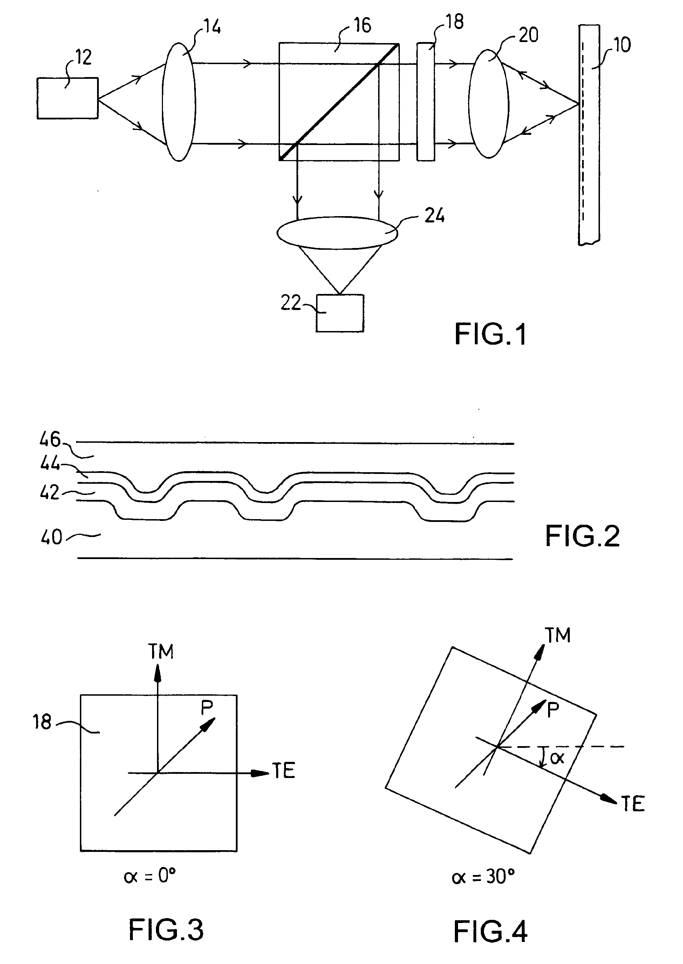

La figure 1 rappelle le principe général de la lecture d'informations optiques. Les informations sont des marques physiques sur un support qui est en général un disque tournant 10 défilant sous la zone de focalisation d'un faisceau laser.

Une source laser 12, par exemple une diode laser, produit un faisceau qui est collimaté par une optique de collimation 14. Le faisceau collimaté, parallèle, est dirigé vers un prisme de séparation de polarisations 16. Le prisme 16 est un prisme polarisant qui laisse passer le faisceau en lui conférant une polarisation linéaire avec une orientation fixe du vecteur de polarisation. Le faisceau ainsi polarisé linéairement passe dans une lame quart-d'onde 18 avant d'être projeté par une optique de focalisation 20 sur le support d'information 10.

La lame quart d'onde est classiquement orientée de manière à produire une polarisation circulaire à partir de la polarisation linéaire qu'elle reçoit. Par conséquent le faisceau laser en sortie de la lame quart d'onde 18 possède des composantes TM et TE équilibrées.

Le faisceau de retour résultant de la réflexion sur le support d'information revient à travers l'optique 20 avec une polarisation circulaire mais de signe opposée à celle du faisceau incident. Le faisceau retraverse la lame quart d'onde et reprend à la sortie une polarisation linéaire, perpendiculaire à celle du faisceau incident sur la lame. Le faisceau réfléchi est alors repris par le prisme de séparation 16 ; le faisceau polarisé à 90° du faisceau incident ne retraverse pas le prisme vers la source mais il est renvoyé par le prisme de séparation vers un détecteur de signal 22, sur lequel il est focalisé par une optique 24.

On verra que dans l'invention la lame quart d'onde 18 est tournée à un angle différent de celui qui permet d'obtenir une polarisation circulaire. Au contraire, elle est tournée de manière à obtenir une polarisation dominante TM.

La figure 2 représente la structure de principe d'un support de stockage conforme à l'invention. Cette structure comporte des marques physiques qui définissent les informations stockées.

Typiquement, les marques sont des creux et des bosses formées par exemple par moulage dans la surface supérieure plane d'un disque en un matériau 40 tel que du polycarbonate. Dans un disque classique, ces marques pourraient être recouvertes d'une couche d'aluminium réfléchissante.

D'autres types de marques pourraient être prévues; en particulier des marques constituées dans une couche transparente par des zones dont l'indice optique est localement modifié ; cette dernière solution est en particulier usuelle pour des disques optiques réinscriptibles. Dans la suite on considérera pour simplifier que les marques sont des creux et bosses formés par pressage.

La longueur des marques dans le sens de défilement sous le faisceau laser de lecture définit l'information enregistrée. Certaines des marques ont des dimensions plus petites que la résolution du système optique de lecture. Typiquement, si le système de stockage est destiné à fonctionner avec un laser de lecture bleu à 400 nanomètres environ, des marques de 100 nanomètres de longueur pourront être présentes dans le support (longueur mesurée dans le sens de défilement des marques sous le faisceau laser de lecture).

Dans l'invention, les marques sont recouvertes par au moins deux couches qui sont respectivement une couche 42 qu'on désignera par "couche active" et une couche 44 en matériau diélectrique transparent. Une couche de protection d'ensemble 46, transparente, peut être prévue au-dessus de la couche diélectrique 44. L'illumination par le faisceau laser de lecture se fait par en haut.

La couche active est, selon l'invention, une couche qui possède deux états différents en ce qui concerne sa structure d'énergie électronique. Dans un premier état, la couche n'est pas apte à porter des plasmons de surface. Dans un deuxième état, où elle est portée grâce à un apport énergétique du faisceau laser de lecture, elle est apte à porter des plasmons de surface.

Le passage du premier état de structure énergétique vers le deuxième état est provoqué par le faisceau laser, mais la densité d'énergie de ce faisceau laser (qui est classiquement distribuée en forme de gaussienne sur une section du faisceau) n'est apte à provoquer ce passage que dans une zone réduite, au centre du faisceau laser, là où la densité de puissance est la plus élevée. Seule une zone réduite de couche active au centre du faisceau laser verra sa structure énergétique modifiée dans une mesure suffisante pour qu'elle devienne apte à porter des plasmons de surface.

Dans le premier état, la couche active a un indice complexe de propagation (n₀, k₀) ou n₀+ik₀ qui ne permet pas à la couche de supporter des plasmons de surface. Mais dans le deuxième état la couche active voit son indice complexe se modifier et devenir (n,k) tel que la couche puisse supporter des plasmons de surface. Une condition pour qu'il en soit ainsi est que k²- n² soit positif et supérieur à k₀² - n₀².

Les matériaux qui peuvent ainsi réagir à l'énergie optique pour devenir apte à porter des plasmons de surface qu'ils ne pourraient pas porter dans leur état ordinaire sont des matériaux semiconducteurs dopés. Les matériaux III-V conviennent bien. L'antimoniure d'indium dopé avec un métal noble (Or, Argent, Platine) est un matériau particulièrement adapté. Le dopage peut aller de 1 atome sur 1 million d'atomes, soit 0,0001%, jusqu'à 5% atomique (dopage par co-pulvérisation par exemple). L'antimoine et l'indium sont en quantités atomiques à peu près équivalentes.

La couche diélectrique 44 qui recouvre la couche active 42 peut être une couche d'oxyde de silicium (silice) SiO₂, ou de nitrure de silicium Si₃N₄ ou un composé de sulfure de zinc et de d'oxyde de silicium ZnS-SiO₂ en proportion atomique d'environ 70 à 85% de sulfure de zinc et le reste en oxyde de silicium.

L'épaisseur de la couche active 42 est de préférence d'environ 10 à 50 nanomètres, de préférence entre 20 et 30 nanomètres. L'épaisseur de couche diélectrique 44 qui la recouvre peut être d'environ 30 à 100 nanomètres, de préférence autour de 50 nanomètres.

La couche active 42 est représentée comme directement en contact avec les creux et bosses du substrat 40 de polycarbonate ; elle pourrait également être encadrée entre deux couches diélectriques, une couche diélectrique (non représentée) semblable à la couche 44 étant alors interposée entre le substrat 40 et la couche active 42.

Pour favoriser l'excitation des plasmons de surface lorsque la couche active est dans son deuxième état énergétique, on prévoit que la polarisation du faisceau laser incident sur la couche est à prédominance TM. Pour cela, on tourne la lame quart d'onde 18 (figure 1) d'un angle α par rapport à la position habituelle qu'on lui donne, à savoir la position qui transforme une polarisation linéaire déterminée en une polarisation circulaire où les ondes TE sont transmises en même proportion que les ondes TM. La lame quart d'onde est une lame biréfringente qui a un indice dépendant de la polarisation de la lumière et qui agit donc sur la lumière en fonction de la polarisation incidente.

La figure 3 représente symboliquement la lame quart d'onde vue de face dans une position habituelle où α = 0 : les directions de polarisation privilégiées par la lame sont désignées par TE et TM. La direction de polarisation incidente sur la lame, c'est-à-dire la polarisation linéaire donnée au faisceau par le prisme 16, est représentée par le vecteur P. Ce vecteur est à 45° des directions de polarisation privilégiées par la lame biréfringente, de sorte que la lumière se partage de manière équilibrée entre les deux composantes de polarisation TM et TE.

La figure 4 représente la configuration selon l'invention dans laquelle la lame quart d'onde est tournée d'un angle α non nul, de l'ordre de 30°, la direction de polarisation représentée par le vecteur P n'ayant pas changé (le prisme 16 est resté fixe et fournit donc toujours un même vecteur de polarisation P). La lame quart d'onde 18 va laisser passer plus de la composante de polarisation TM et moins de composante de polarisation TE. (sans pour autant éteindre la composante TE qui participe à l'obtention d'un signal en retour).

L'angle de rotation peut être choisi dans une large gamme (entre 5° et 40°), l'angle préférentiel se situant autour de 30°.

En faisant tourner la lame quart d'onde, on constate que la forme du faisceau laser devient plus elliptique, la distribution d'énergie du faisceau étant sensible à la polarisation lorsqu'on travaille à forte ouverture numérique ; on fait en sorte que le petit axe de l'ellipse soit orienté dans le sens de défilement des marques sous le faisceau laser, ce qui améliore la qualité de la lecture.

Les puissances de laser de lecture utilisées pour obtenir les effets recherchés sont de l'ordre de 1,20 à 1,40 milliwatts.

Les mesures effectuées sur des échantillons portant des marques de 100 nanomètres ou 80 nanomètres, et utilisant des puissances de lecture respectives de 1,35 milliwatts et 1,25 milliwatts à une longueur d'onde bleue de 405 nanomètres, ont montré qu'on gagnait un facteur 2 dans le taux d'erreur, à méthode de lecture identique, lorsqu'on faisait tourner la lame quart d'onde de la position 0° à une position de 28°.

Dans une variante de réalisation, on considère que la polarisation du faisceau incident n'est pas uniforme sur toute la section du faisceau, et on remplace la lame quart d'onde ayant deux directions de réfringence principales par une juxtaposition de lames quart d'onde ayant des directions de réfringence principales qui ne sont pas toutes les mêmes. Chaque lame agit sur une portion de la section du faisceau. Les directions individuelles sont choisies pour obtenir une polarisation dominante de type TM en sortie de la lame dans toutes les zones de la section du faisceau. On peut aussi intercaler, entre le cube polariseur et une lame quart d'onde à orientation uniforme, une lame demi-onde constituée de plusieurs lames demi-ondes juxtaposées d'axes neutres différents agissant chacune sur une portion de la section du faisceau laser. Par exemple, la lame demi-onde est formée de quatre secteurs juxtaposés dans un plan, ayant des axes neutres respectifs d'orientation différentes, deux secteurs voisins ayant des axes neutres orientés à 45° l'une de l'autre.

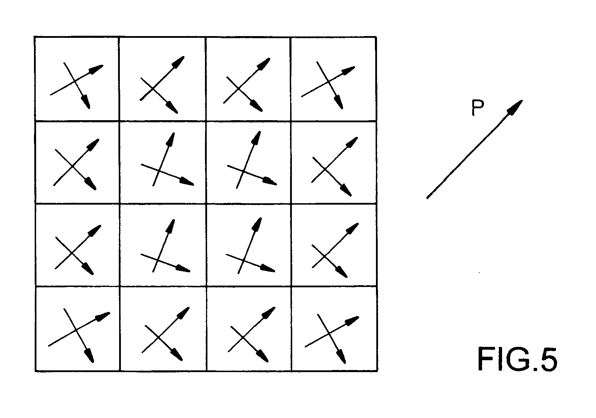

La figure 5 représente, en vue agrandie, une lame formée d'une telle juxtaposition de lames. On a symbolisé les directions de biréfringence individuelles de chaque lame par deux flèches orthogonales, de la même manière qu'aux figures 3 et 4. La lame est représentée avec une orientation globale qui optimise la transmission du mode TM lorsque le vecteur P de polarisation moyenne de la lumière incidente est orienté comme indiqué sur la figure.

Le signal analogique résultant de la lecture de ces marques en super-résolution fera l'objet d'un traitement de signal suffisamment adapté à la lecture de marques très petites et très rapprochées. Typiquement, on utilisera un traitement de type PRML ("Partial Response - Maximum Likelihood") qui consiste à :
- faire une estimation théorique des formes de réponse que peut prendre le signal en sortie du canal de traitement d'information lorsque ce canal reçoit différents modèles de successions d'informations binaires (Réponse Partielle PR) ; le canal est toute la chaîne de traitement (de l'enregistrement à la lecture) qui va d'une succession d'informations binaires qu'on désire stocker dans le support de stockage à la restitution d'un signal analogique résultant de la lecture de cette information binaire dans le support, en passant par l'enregistrement de marques physiques dans le support ;
- et faire une comparaison entre le signal de sortie effectivement détecté et les différentes formes de réponse théoriques pour déterminer quelle est la succession d'informations binaires qui a le plus probablement été émise à l'entrée du canal pour donner ce signal en sortie (Maximum de Vraisemblance ML).

## Revendications

1. Procédé de lecture optique d'informations inscrites dans un support de stockage à haute densité, dans lequel
- d'une part les informations enregistrées dans le support de stockage sont recouvertes par une couche active (42) ayant un premier et un deuxième états d'énergie électronique possibles, la couche étant apte dans le deuxième état seulement à supporter des plasmons de surface engendrés par une illumination par un faisceau laser de lecture, cette couche active étant recouverte par une couche diélectrique transparente (44),
- d'autre part la lecture optique est effectuée à partir d'une source laser (12), une optique de focalisation (20), et des moyens de polarisation (16, 18) du faisceau focalisé, la densité de puissance dans une zone réduite au centre du faisceau laser focalisé étant suffisante pour faire passer la couche active du premier état vers le deuxième état énergétique de manière à la rendre apte à supporter des plasmons de surface, **caractérisé en ce que** la couche active est une couche de matériau semiconducteur dopé ayant un indice différent dans ses deux états énergétiques, l'indice complexe n+ik dans le second état répondant à la condition k²-n² positif.

2. Procédé de lecture selon la revendication 1, dans lequel les moyens de polarisation (16, 18) confèrent au faisceau laser une polarisation prédominante en mode TM.

3. Procédé de lecture selon la revendication 2, dans lequel les moyens de polarisation comportent une lame biréfringente quart d'onde (18) orientée avec un angle alpha non nul par rapport à une orientation de référence qui conférerait au faisceau laser une polarisation circulaire.

4. Procédé de lecture selon la revendication 3, dans lequel l'angle alpha est compris entre 25° et 35°.

5. Procédé de lecture selon l'une des revendications 1 à 4, dans lequel la couche active est en antimoniure d'indium dopé avec de l'or, de l'argent ou du platine.

6. Procédé de lecture selon la revendication 5, dans lequel le dopage est compris entre 0,0001 % et 5% en proportions atomiques.

7. Support de stockage optique destiné à être lu par le procédé selon l'une des revendication précédentes, comportant un substrat (40) dans lequel sont formées des marques physiques, les marques étant recouvertes d'une couche active (42) et d'une couche diélectrique (44), la couche active étant en un matériau ayant un premier et un deuxième états d'énergie électronique possibles, la couche étant apte dans le deuxième état seulement à supporter des plasmons de surface engendrés par une illumination par un faisceau laser de lecture, **caractérisé en ce que** la couche active est une couche de matériau semiconducteur dopé ayant un indice différent dans ses deux états énergétiques, l'indice complexe n+ik dans le second état répondant à la condition k²-n² positif.

8. Support de stockage selon la revendication 7, dans lequel la couche active est en antimoniure d'indium dopé avec de l'or, de l'argent, ou du platine en proportion atomique d'environ 0,0001% à 5%.

9. Système de lecture optique d'informations pour la mise en oeuvre du procédé selon l'une des revendications 1 à 6, **caractérisé en ce qu'**il comporte une source laser (12), une optique de focalisation (20), et des moyens de polarisation (16, 18) du faisceau focalisé, la densité de puissance dans une zone réduite au centre du faisceau laser focalisé étant suffisante pour faire passer une couche active du support de stockage de son premier état énergétique vers le deuxième état énergétique de manière à la rendre apte à supporter des plasmons de surface, les moyens de polarisation étant aptes à polariser le faisceau laser en mode TM prédominant.

10. Système de lecture optique selon la revendication 9, dans lequel les moyens de polarisation comportent un prisme de polarisation linéaire (16) et, en aval du prisme, une lame biréfringente quart d'onde (18) tournée d'un angle d'environ 25 à 35° par rapport à une orientation de référence qui polariserait circulairement le faisceau laser sortant du prisme.

11. Système de lecture optique selon la revendication 9, dans lequel les moyens de polarisation comportent un prisme de polarisation linéaire et un ensemble de lames biréfringentes quart d'onde juxtaposées, orientées chacune de manière à conférer une polarisation TM prédominante à la portion de faisceau laser qui la traverse.

## Claims

1. An optical method of reading information written in a high-density storage medium, in which
- on the one hand, the information written in the storage medium is covered by an active layer (42) having a first possible electronic energy state and a second possible electronic energy state, the layer being capable only in the second state of bearing surface plasmons generated by an illumination by a reading laser beam, this active layer being covered by a transparent dielectric layer (44),
- on the other hand, the optical reading is carried out using a laser source (12), focusing optics (20) and means of polarization (16, 18) of the focused beam, the power density in a small zone at the center of the focused laser beam being sufficient to cause the active layer to change from the first state into the second energy state in such a way as to make it capable of bearing surface plasmons, **characterized in that** the active layer is a layer of doped semiconductive material having a different index in its two energy states, the complex index n+ik in the second state satisfying the condition k²-n² positive.

2. The method as claimed in claim 1, in which the polarization means (16, 18) provide the laser beam with a TM predominant polarization mode.

3. The method as claimed in claim 2, in which the polarization means comprise a quarter-wave birefringent plate (18) oriented at an non-zero angle alpha with respect to a reference orientation which would provide the laser beam with a circular polarization.

4. The method as claimed in claim 3, in which the angle alpha is between 25 ° and 35 °.

5. The reading method as claimed in one of claims 1 to 4, in which the active layer is made of indium antimonide doped with gold, silver or platinum.

6. The reading method as claimed in claim 5, in which the doping is between 0.0001 % and 5% in atomic proportions.

7. An optical storage medium intended to be read using the method as claimed in one of the preceding claims, comprising a substrate (40) in which physical marks are formed, the marks being covered by an active layer (42) and by a dielectric layer (44), the active layer being made of a material having a first possible electronic energy state and a second possible electronic energy state, the layer being capable only in the second state of bearing surface plasmons generated by an illumination by a reading laser beam, **characterized in that** the active layer is a layer of doped semiconductive material having a different index in its two energy states, the complex index n+ik in the second state satisfying the condition k²-n² positive.

8. The storage medium as claimed in claim 7, in which the active layer is made of indium antimonide doped with gold, silver or platinum in an atomic proportion of about 0.0001% to 5%.

9. A system for the optical reading of information for the implementation of the method as claimed in one of claims 1 to 6, **characterized in that** it comprises a laser source (12), focusing optics (20) and means of polarization (16, 18) of the focused beam, the power density in a small zone at the center of the focused laser beam being sufficient to cause an active layer of the storage medium to change from its first energy state into the second energy state in such a way as to make it capable of bearing surface plasmons, the polarization means being capable of polarizing the laser beam in TM predominant mode.

10. The optical reading system as claimed in claim 9, in which the polarization means comprise a linear polarization prism (16) and, downstream of the prism, a quarter-wave birefringent plate (18) rotated through an angle of about 25 to 35° with respect to a reference orientation which would circularly polarize the laser beam leaving the prism.

11. The optical reading system as claimed in claim 9, in which the polarization means comprise a linear polarization prism and a set of juxtaposed birefringent quarter-wave plates, oriented in such a way as to impart a TM predominant polarization to the portion of laser beam passing through it.

## Patentansprüche

1. Verfahren zum Lesen optischer Informationen, die auf einem Datenträger mit hoher Dichte geschrieben sind, bei dem:
- einerseits die in dem Datenträger gespeicherten Informationen mit einer aktiven Schicht (42) mit einem ersten und einem zweiten möglichen elektronischen Energiezustand bedeckt sind, wobei die Schicht im zweiten Zustand nur die durch eine Beleuchtung mit einem Leselaserstrahl erzeugten Oberflächenplasmons aushalten kann, wobei diese aktive Schicht mit einer transparenten dielektrischen Schicht (44) bedeckt ist,
- andererseits das optische Lesen von einer Laserquelle (12), einer Fokussieroptik (20) und Mitteln (16, 18) zum Polarisieren des fokussierten Strahls erfolgt, wobei die Leistungsdichte in einer reduzierten Zone im Zentrum des fokussierten Laserstrahls ausreicht, um die aktive Schicht des ersten Zustands in den zweiten Energiezustand passieren zu lassen, so dass sie die Oberflächenplasmons aushalten kann, **dadurch gekennzeichnet, dass** die aktive Schicht eine dotierte Halbleitermaterialschicht mit einem anderen Index in ihren beiden Energiezuständen ist, wobei der komplexe Index n+ik im zweiten Zustand der positiven Bedingung k²-n² entspricht.

2. Verfahren zum Lesen nach Anspruch 1, wobei die Polarisationsmittel (16, 18) dem Laserstrahl eine überwiegende TM-Moden-Polarisation vermitteln.

3. Verfahren zum Lesen nach Anspruch 2, wobei die Polarisationsmittel eine doppelbrechende Viertelwellenplatte (18) umfassen, die in einem Winkel Alpha von ungleich null in Bezug auf eine Referenzorientierung orientiert ist, die dem Laserstrahl eine Kreispolarisation vermittelt.

4. Verfahren zum Lesen nach Anspruch 3, wobei der Winkel Alpha zwischen 25° und 35° liegt.

5. Verfahren zum Lesen nach einem der Ansprüche 1 bis 4, wobei die aktive Schicht aus mit Gold, Silber oder Platin dotiertem Indiumantimonid besteht.

6. Verfahren nach Anspruch 5, wobei die Dotierung zwischen 0,0001% und 5% in Atomanteilen liegt.

7. Optischer Datenträger, der mit dem Verfahren nach einem der vorherigen Ansprüche gelesen werden kann und der ein Substrat (40) umfasst, in dem physische Markierungen ausgebildet sind, wobei die Markierungen mit einer aktiven Schicht (42) und einer dielektrischen Schicht (44) bedeckt sind, wobei die aktive Schicht aus einem Material mit einem ersten und einem zweiten möglichen Energiezustand besteht, wobei die Schicht im zweiten Zustand nur die durch eine Beleuchtung mit einem Leselaserstrahl erzeugten Oberflächenplasmons aushalten kann, **dadurch gekennzeichnet, dass** die aktive Schicht eine dotierte Halbleitermaterialschicht mit einem anderen Index in ihren beiden Energiezuständen ist, wobei der komplexe Index n+ik im zweiten Zustand der positiven Bedingung k²-n² entspricht.

8. Optischer Datenträger nach Anspruch 7, bei dem die aktive Schicht aus Indiumantimonid besteht, das mit Gold, Silber oder Platin in einem Atomanteil von etwa 0,0001% bis 5% dotiert ist.

9. System zum optischen Lesen von Informationen zum Ausführen des Verfahrens nach einem der Ansprüche 1 bis 6, **dadurch gekennzeichnet, dass** es Folgendes umfasst: eine Laserquelle (12), eine Fokussieroptik (20) und Mittel (16, 18) zum Polarisieren des fokussierten Strahls, wobei die Leistungsdichte in einer reduzierten Zone im Zentrum des fokussierten Laserstrahls ausreicht, um eine aktive Schicht des Datenträgers von seinem ersten Zustand in den zweiten Energiezustand passieren zu lassen, so dass sie die Oberflächenplasmons aushalten kann, wobei die Polarisationsmittel den Laserstrahl in der überwiegenden TM-Mode polarisieren kann.

10. System zum optischen Lesen nach Anspruch 9, bei dem die Polarisationsmittel ein lineares Polarisationsprisma (16) und unterhalb des Prismas eine doppelbrechende Viertelwellenplatte (18) umfassen, das um einen Winkel von etwa 25 bis 35° in Bezug auf eine Referenzorientierung gedreht ist, die den das Prisma verlassenden Laserstrahl kreisförmig polarisieren würde.

11. System zum optischen Lesen nach Anspruch 9, bei dem die Polarisationsmittel ein lineares Polarisationsprisma und einen Satz nebeneinander liegender doppelbrechender Viertelwellenplatten umfassen, die jeweils so orientiert sind, dass sie dem sie durchquerenden Laserstrahl eine überwiegende TM-Polarisation vermitteln.
